# EUROPÄISCHE PATENTSCHRIFT

(11) **EP 3 802 250 B1**
(45) Veröffentlichungstag und Bekanntmachung des Hinweises auf die Patenterteilung: **22.03.2023**
(21) Anmeldenummer: 19729483.8
(22) Anmeldetag: 04.06.2019
(51) Int. Cl.: B60T 13/66, B60T 13/68, B60T 17/22

(54) **ELEKTRONISCHE EINRICHTUNG ZUM STEUERN EINES ELEKTRO-PNEUMATISCHEN FESTSTELLBREMSKREISES, EIN FESTSTELLBREMSSYSTEM FÜR EIN FAHRZEUG UND EIN VERFAHREN ZUM STEUERN EINES ELEKTRO-PNEUMATISCHEN FESTSTELLBREMSKREISES**
ELECTRONIC DEVICE FOR CONTROLLING AN ELECTROPNEUMATIC PARKING BRAKE CIRCUIT, PARKING BRAKE SYSTEM FOR A VEHICLE AND METHOD FOR CONTROLLING AN ELECTROPNEUMATIC PARKING BRAKE CIRCUIT
DISPOSITIF ÉLECTRONIQUE PERMETTANT DE COMMANDER UN CIRCUIT DE FREINAGE DE STATIONNEMENT ÉLECTROPNEUMATIQUE, SYSTÈME DE FREINAGE DE STATIONNEMENT DESTINÉ À UN VÉHICULE ET PROCÉDÉ DE COMMANDE D'UN CIRCUIT DE FREINAGE DE STATIONNEMENT ÉLECTROPNEUMATIQUE

(30) Priorität: 05.06.2018 DE 102018113299
(43) Veröffentlichungstag der Anmeldung: 14.04.2021
(73) Patentinhaber: ZF CV Systems Europe BV, 1170 Brussels (BE)
(72) Erfinder: MALASKE, Andreas, 30952 Ronnenberg (DE); BOGON, Thor-Björn, 30161 Hannover (DE); HEIDER, Joachim, 31226 Peine (DE); FRANKE, Torsten, verstorben (DE)
(74) Vertreter: Rabe, Dirk-Heinrich
(86) Internationale Anmeldenummer: PCT/EP2019/064410
(87) Internationale Veröffentlichungsnummer: WO 2019/233977

(56) Entgegenhaltungen:
- EP-A1- 1 504 975
- EP-A1- 3 031 683
- DE-A1-102014 006 615
- DE-A1-102016 005 318
- DE-B3-102015 114 176

## Beschreibung

Die Erfindung betrifft eine elektronische Einrichtung zum Steuern eines elektro-pneumatischen Feststellbremskreises für ein Fahrzeug. Weiterhin betrifft die Erfindung ein elektro-pneumatisches Feststellbremssystem und ein Fahrzeug, welches das elektro-pneumatische Feststellbremssystem aufweist. Die Erfindung betrifft weiterhin ein Verfahren zum Steuern eines elektro-pneumatischen Feststellbremskreises für ein Fahrzeug, mittels einer elektronischen Einrichtung.

In Straßen- und Schienenfahrzeugen wird regelmäßig ein elektro-pneumatisches Feststellbremssystem zum Steuern einer Feststellbremse, auch Parkbremse genannt, eingesetzt. Die Feststellbremse kann in dem Fahrzeug zum Beispiel als Feststellbremse oder auch als Hilfs- oder Notbremse genutzt werden. Ein elektro-pneumatisches Feststellbremssystem weist typischerweise einen elektro-pneumatischen Feststellbremskreis, eine Steuerelektronik zum Steuern des Feststellbremskreises und eine Feststellbremse auf. Die Feststellbremse wirkt in der Regel drucklos über eine mechanische, von einer Feder ausgebübte, Kraft. Um den Betriebszustand der Feststellbremse zu beeinflussen, weist ein elektro-pneumatisches Feststellbremssystem in der Regel weiterhin eine Anzahl von Federspeicherbremszylindern auf, die pneumatisch an einen elektro-pneumatischen Feststellbremskreis angeschlossen sind.

Wenn der Federspeicherbremszylinder entlüftet ist, ist die Feststellbremse in der Regel festgestellt, da die Bremsbeläge mittels einer mechanischen Federkraft an die Bremsscheibe oder die Bremstrommel gedrückt werden. Bei Betätigung der Feststellbremse werden die Federspeicherbremszylinder mit Druckluft beaufschlagt und so eine Kraft erzeugt, die der mechanischen Federkraft entgegenwirkt, um so die Feststellbremse zu lösen. Im belüfteten Zustand ist die Feststellbremse also gelöst und im entlüfteten Zustand festgestellt. Dies hat den Vorteil, dass die Feststellbremse bei einem Ausfall der Druckluftversorgung aktuiert wird und das Fahrzeug zum Stehen gebracht wird.

Neben einem Druckluftvorrat weist ein elektro-pneumatischer Feststellbremskreis regelmäßig eine Anzahl von pneumatischen Leitungen und Ventilen auf über die die Druckluft verteilt wird. Zum Beispiel wird regelmäßig ein RelaisVentil genutzt, um eine Anzahl von Federspeicherbremszylinder über einen Federspeicheranschluss mit Druckluft zu versorgen. Die Be- oder Entlüftung der Federspeicherbremszylinder wird oft über ein elektro-pneumatisches Bistabil-Ventil gesteuert, welches zwei stabile Schaltzustände aufweist, die über einen elektrischen Steuerimpuls in den jeweils anderen Schaltzustand überführt werden können.

Der Zustand, genauer der Belüftungszustand oder der Entlüftungszustand, der Federspeicherbremszylinder wird durch den Schaltzustand des Bistabil-Ventils bestimmt und dauerhaft aufrechterhalten. Um den Zustand der Federspeicherbremszylinder zu verändern muss also der Schaltzustand des Bistabil-Ventils mittels eines Steuerimpulses verändert werden. Dieser Steuerimpuls wird in der Regel als Stromimpuls von einer mit dem elektro-pneumatischen Feststellbremskreis verbundenen elektronischen Steuereinheit (ECU) bereitgestellt. Insofern weist ein bekannter Feststellbremskreis wenigstens ein elektro-pneumatisches Bistabil-Ventil auf, das mittels einer elektronischen Steuereinheit in einem ersten Betriebszustand in einen ersten Schaltzustand und in einem zweiten Betriebszustand in einen zweiten Schaltzustand überführbar ist, wobei der Feststellbremskreis derart ausgebildet ist, dass eine Feststellbremse in dem ersten Betriebszustand festgestellt ist und in dem zweiten Betriebszustand gelöst ist. Um den Schaltzustand eines Bistabil-Ventils zu ändern reicht typischerweise ein Stromimpuls mit einer Pulsdauer weniger als eine Sekunde aus. Der Schaltzustand bleibt dann so lange stabil bis ein entsprechender Steuerimpuls, also ein erneuter Stromimpuls, zum Ändern des Schaltzustands bereitgestellt wird.

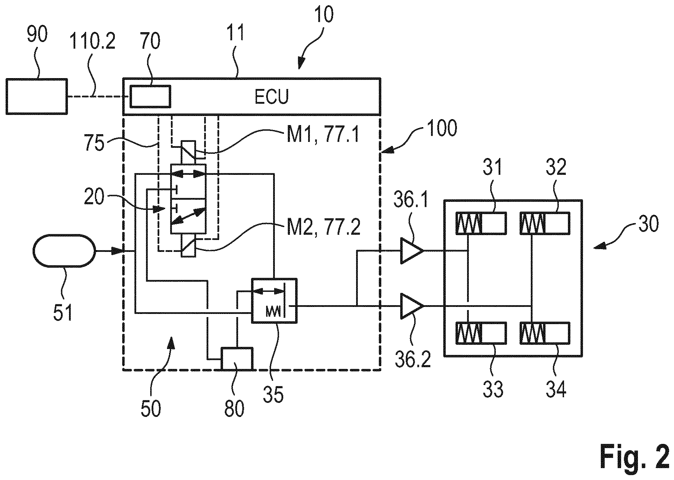

In EP 1 504 975 B1 ist ein System einer druckmittelbetriebenen Bremsanlage für ein Fahrzeug mit einem elektro-pneumatischen Feststellbremskreis gemäß einem Feststellbrems-Modul wie in FIG. 2 derselben gezeigt beschrieben. Das Feststellbrems-Modul mit einer elektrisch betätigbaren Ventileinrichtung weist ein Bistabil-Ventil mit einer bistabilen Schaltfunktion mit zwei Schaltzuständen auf, wobei in einem ersten Schaltzustand ein Druckmittel zu dem die Radbremse betätigenden Aktuator zuführbar und in einem zweiten Schaltzustand Druckmittel von dem Aktuator abführbar ist. Die Verwendung eines solchen Bistabil-Ventils hat den Vorteil, dass bei einem Ausfall oder einer Störung der fahrzeugseitigen Spannungsversorgung das Bistabil-Ventil seinen zuletzt eingestellten Schaltzustand beibehält. Dies hat gegenüber Ventilkonzepten, die eine bevorzugte Ruhestellung bei Ausfall der elektrischen Energie haben, den Vorteil, dass die einschlägigen gesetzlichen Bestimmungen erfüllbar sind, gemäß denen bei Ausfall oder einer Störung der fahrzeugseitigen Spannungsversorgung die Feststellbremse ihren zuletzt eingestellten Zustand beizubehalten hat. Die bekannten Ventilkonzepte dagegen erlauben nur eine einheitliche konstruktiv bedingte Ruhestellung, wenn keine ausreichende Spannungsversorgung zur Verfügung steht. An oder in dem in EP 1 504 975 B1 beschriebenen Feststellbrems-Modul ist ein elektrischer Energiespeicher vorgesehen, welcher zur zumindest teilweisen Aufrechterhaltung der Feststellbrems-Funktion bei einem Ausfall oder einer Störung der fahrzeugseitigen Spannungsversorgung dient. Dies hat den Vorteil, dass auch bei einem Ausfall oder einer Störung der fahrzeugseitigen Spannungsversorgung noch bestimmte eingeschränkte Funktionalitäten der Feststellbrems-Funktion aktivierbar sind.

Problematisch bei dieser bekannten Lösung ist jedoch, dass im Falle einer Fehlfunktion, z.B. für den Fall, dass das elektro-pneumatische Feststellbremssystem einen Defekt aufweisen sollte, z. B. weil die Energieversorgung für die elektronische Steuerelektronik (ECU) unterbrochen oder zu gering ist oder die elektronische Steuerelektronik selbst einen Defekt aufweist, sich das Bistabil-Ventil nicht mehr betätigen lässt. Durch die fehlende Druckluftzufuhr ist die Feststellbremse festgestellt, sodass das Fahrzeug nicht mehr bewegt werden kann. Ein Fahrzeug mit einer defekten Feststellbremse lässt sich also in der Regel nicht mehr abschleppen. Dies gilt es zu vermeiden. Für diesen Fall ist eine Notlösefunktion von großem Interesse, mittels der die Feststellbremse auch bei einem Defekt des elektro-pneumatischen Feststellbremssystems gelöst werden kann und das Fahrzeug wieder bewegt werden kann.

Regelmäßig lassen sich Feststellbremsen mechanisch lösen in dem die Feder mittels Notlöseschrauben gespannt wird. Auch Notlösefunktionen für Feststellbremsen, die auf dem Einsatz von Druckluft basieren, sind aus dem Stand der Technik bekannt.

In EP 2146882B1 wird eine Feststellbremseinrichtung eines Fahrzeugs mit Notlösefunktion sowie ein Verfahren zum Betreiben einer derartigen Feststellbremseinrichtung beschrieben. Die Feststellbremseinrichtung weist hierbei einen ersten Feststellbremskreis mit einem ersten Druckluftvorratsbehälter und einer ersten Steuerventileinrichtung zum Be- oder Entlüften eines Federspeicherbremszylinders, und einen zweiten elektropneumatischen Feststellbremskreis zum Notlösen einer Feststellbremse bei Ausfall des ersten Feststellbremskreises auf. Der zweite elektropneumatische Feststellbremskreis weist einen zweiten Druckluftvorratsbehälter und eine zweite Steuerventileinrichtung zum Belüften des Federspeicherbremszylinders im Notlösefall auf. Außerdem weist die zweite Steuerventileinrichtung einen mit dem zweiten Druckluftvorratsbehälter verbundenen Belüftungsanschluss, einen mit der Atmosphäre verbindbaren Entlüftungsanschluss und einen mit dem Federspeicherbremszylinder verbindbaren dritten Anschluss auf, wobei der Entlüftungsanschluss der zweiten Steuerventileinrichtung mit einer Druckluftleitung verbunden ist, die an einem äußeren Bereich des Fahrzeugs endet. Über diese Druckluftleitung ist Druckluft von einer externen Druckluftquelle über den Entlüftungsanschluss und einen dritten Anschluss der zweiten Steuerventileinrichtung dem Federspeicherbremszylinder zuführbar.

In EP 1888389 B1 wird eine Parkbremseinrichtung eines Fahrzeugs mit elektro-pneumatischer Notlöseeinrichtung beschrieben. Die Parkbremseinrichtung weißt hierbei wenigstens einen Federspeicherbremszylinder sowie einen ersten Parkbremskreis mit einem Vorratsdruckbehälter und einer ersten Steuerventileinrichtung auf, welche den wenigstens einen Federspeicherbremszylinder be-oder entlüftet. Weiterhin weist die Parkbremseinrichtung einen weiteren elektropneumatischen Parkbremskreis mit einem weiteren, separaten Vorratsdruckbehälter und einer wenigstens ein Magnetventil beinhaltenden weiteren Steuerventileinrichtung wenigstens zum Belüften des Federspeicherbremszylinders im Notlösefall auf, falls der erste Parkbremskreis ausfällt. Die weitere Steuerventileinrichtung ist in unmittelbarer Nähe des wenigstens einen Federspeicherbremszylinder angeordnet.

Beide Lösungsansätze beruhen auf der Idee einer zusätzlichen elektropneumatischen Steuerventileinrichtung, über die Federspeicherbremszylinder bei Ausfall einer ersten Steuerventileinrichtung belüftet werden können. Durch die Belüftung der Federspeicherbremszylinder wird die Feststellbremse gelöst und das Fahrzeug kann bewegt und abgeschleppt werden. Regelmäßig wird die zusätzliche elektro-pneumatischen Steuerventileinrichtung durch einen externen Druckluftvorrat versorgt, wobei der Zugang zum Anschluss des externen Druckluftvorrats an die zusätzliche Steuerventileinrichtung oft schwierig und wenig nutzerfreundlich ist.

EP 3 031 683 A1 offenbart eine Feststellbremsanlage mit einem ersten, über die Fahrzeugbatterie oder eine Lichtmaschine energieversorgten Steuerkreis und einem redundanten zweiten Steuerkreis, der zur Energieversorgung eine Batterie, einen Akkumulator, einen Generator, Impulsgeber, ein Piezoelement und/oder einen Treibsatz enthält.

DE 10 2015 114 176 B3 offenbart eine elektrische Parkbremseinrichtung, welche zusätzlich zu einer ersten elektrischen Energieversorgung eine zusätzliche Energieversorgung umfasst, die zum Beispiel durch eine zusätzliche Bordbatterie gebildet wird..

Es ist daher wünschenswert eine vereinfachte oder jedenfalls alternative Notlösefunktion für eine Feststellbremse bereitzustellen. Insbesondere sollte die Notlösefunktion ohne eine zusätzliche Steuerventileirichtung auskommen. Vorzugsweise sollte die Notlösefunktion für einen Nutzer bedienungsfreundlich ist.

An dieser Stelle setzt die Erfindung ein, deren Aufgabe es ist, wenigstens einen der oben genannten Aspekte zu adressieren, insbesondere eine Vorrichtung und ein Verfahren anzugeben, mittels welcher ein vereinfachter Aufbau einer Notlösefunktion für eine Feststellbremse realisierbar ist; insbesondere einen Aufbau, bei dem keine zusätzliche Steuerventileinrichtung verwendet wird, um eine Notlösefunktion für eine Feststellbremse bereitzustellen. Vorzugsweise soll mittels der elektronischen Einrichtung die Bedienungsfreundlichkeit für einen Nutzer verbessert werden.

Diese Aufgabe wird hinsichtlich der Vorrichtung durch eine elektronische Einrichtung zum Steuern eines elektro-pneumatischen Feststellbremskreises gemäß dem Anspruch 1 gelöst.

Die Erfindung geht aus von einer elektronischen Einrichtung mit einer elektronischen Steuereinheit (ECU) zum Steuern eines elektro-pneumatischen Feststellbremskreises für ein Fahrzeug, wobei der Feststellbremskreis zum Aktuieren wenigstens einer an den Feststellbremskreis pneumatisch angeschlossenen Feststellbremse ausgebildet ist. Der Feststellbremskreis weist wenigstens ein elektro-pneumatisches Bistabil-Ventil auf, das mittels der elektronischen Steuereinheit in einem ersten Betriebszustand in einen ersten Schaltzustand und in einem zweiten Betriebszustand in einen zweiten Schaltzustand überführbar ist. Der Feststellbremskreis ist derart ausgebildet, dass die Feststellbremse in dem ersten Betriebszustand festgestellt ist und in dem zweiten Betriebszustand gelöst ist. Die elektronische Steuereinheit (ECU) ist durch eine erste Energiequelle betreibbar.

Erfindungsgemäß ist eine elektronische Steuerschaltung vorgesehen, mittels welcher das elektro-pneumatische Bistabil-Ventil in den ersten oder zweiten Schaltzustand überführbar ist. Die elektronische Steuerschaltung ist mittels einer zweiten Energiequelle betreibbar.

Die Erfindung führt auch auf ein elektro-pneumatisches Feststellbremssystem gemäß dem Anspruch 13 und ein Fahrzeug gemäß dem Anspruch 14.

Die Aufgabe wird hinsichtlich des Verfahrens durch ein Verfahren gemäß dem Anspruch 15 gelöst.

Die Erfindung beruht auf der Überlegung, dass das Bistabil-Ventil wesentlich für die Be- und Entlüftung der Federspeicherbremszylinder ist. Die Feststellbremse ist je nach Be- und Entlüftungszustand des Federspeicherbremszylinders gelöst oder festgestellt.

Der Erfindung liegt die Erkenntnis zu Grunde, dass eine direkte Beeinflussung des Schaltzustands des Bistabil-Ventils ein interessanter Anknüpfungspunkt für eine Notlösevorrichtung für eine Feststellbremse ist. Wenn der Schaltzustand des Bistabil-Ventils durch einen Nutzer aktiv verändert werden kann, ist es möglich die Feststellbremse zu lösen oder festzustellen, ohne dass eine weitere Steuerventileinrichtung vorgesehen sein muss.

Erfindungsgemäß ist gemäß dieser Erkenntnis zusätzlich zu einer elektronischen Steuereinheit (ECU) eine elektronische Steuerschaltung vorgesehen mittels der der Schaltzustand des Bistabil-Ventils verändert werden kann, auch wenn die elektronische Steuereinheit (ECU) selbst nicht funktionsfähig ist. Gründe für einen Ausfall der elektronischen Steuereinheit (ECU) können z. B. eine Unterbrechung der Energieversorgung oder eine zu geringe Energieversorgung durch eine erste Energiequelle sein. Auch eine Fehlfunktion der elektronischen Steuereinheit (ECU) selbst ist denkbar.

Die elektronische Steuerschaltung wird im Anwendungsfall von einer zweiten Energiequelle versorgt. Die elektronische Steuerschaltung ist also vorzugsweise unabhängig von der ersten Energiequelle. Die elektronische Steuerschaltung ist derart ausgebildet, dass eine Notlösefunktion der Feststellbremse durch Be-oder Entlüften der Federspeicherbremszylinder ermöglicht wird. Die Notlösefunktion ist insbesondere möglich, wenn die elektronische Steuereinheit (ECU) nicht mehr einsetzbar ist, z. B. durch einen Ausfall der ersten Energiequelle. Vorteilhafterweise wird also durch die Erfindung eine Notlösefunktion mittels einer einfachen elektronischen Steuerschaltung bereitgestellt, die durch eine zweite Energiequelle versorgt wird.

Gemäß dem Konzept der Erfindung ist eine Notlösefunktion im Vergleich zu gegenwärtigen Lösungen vereinfacht. Die Notlösefunktion kommt konzeptionell ohne eine zusätzliche Steuerventileinrichtung aus und ist vergleichsweise bedienungsfreundlich für einen Nutzer.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Die elektronische Steuerschaltung wird vorzugsweise durch die elektronische Steuereinheit (ECU) freigegeben und/oder verriegelt. Wenn die elektronische Steuereinheit (ECU) funktionsfähig ist, kann die elektronische Steuerschaltung durch die Spannungsversorgung der elektronischen Steuereinheit (ECU) verriegelt sein. Dadurch kann eine ungewollte Aktivierung der elektronischen Steuerschaltung und eine resultierende Änderung des Schaltzustands des Bistabil-Ventils verhindert werden.

Darüber hinaus ist es bevorzugt, dass die elektronische Steuerschaltung und die elektronische Steuereinheit (ECU) voneinander elektrisch unabhängig sind. Außerdem ist bevorzugt, dass die elektronische Steuerschaltung während des Betriebs des Fahrzeugs nicht beansprucht wird. -Vorteilhafterweise ist dann das Risiko eines Defekts der elektronischen Steuerschaltung gering. Ein weiterer Vorteil der elektronischen Unabhängigkeit der elektronischen Steuerschaltung von der elektronischen Steuereinheit (ECU) ist, dass ein Sicherheitskonzept des elektro-pneumatischen Feststellbremssystems nicht beeinflusst wird oder umgangen werden muss. Auch kann der Aufbau der elektronischen Steuerschaltung weniger komplex als der Aufbau der elektronischen Steuereinheit (ECU) sein. Die elektronische Steuerschaltung kann einfach und kostengünstig gestaltet werden.

Mittels der elektronischen Steuerschaltung kann der Betriebszustand des elektro-pneumatischen Bistabil-Ventils verändert werden. Hierbei kann das Bistabil-Ventil mittels der elektronischen Steuereinheit in einem ersten Betriebszustand in einen ersten Schaltzustand und in einem zweiten Betriebszustand in einen zweiten Schaltzustand überführt werden. Durch die elektronische Steuerschaltung ist das elektro-pneumatische Bistabil-Ventil also in den ersten oder zweiten Schaltzustand überführbar.

Vorzugsweise ist die Steuerschaltung thermisch geschützt, insbesondere wie die elektronische Steuereinheit (ECU) thermisch geschützt. Vorteilhaft unterliegt die Steuerschaltung den gleichen thermischen Bedingungen wie die elektronische Steuereinheit (ECU) bzw. die weitere Elektronik.

Bevorzugt weist die elektronische Steuerschaltung einen LS (Low Side)-Schalter mit einem leitenden und einem nicht-leitenden Schaltzustand auf, wobei mittels der elektronische Steuerschaltung der Schaltzustand des LS-Schalters geändert werden kann, insbesondere zusätzlich zu einer Steuerschaltung für einen HS (High Side)-Schalter für einen Normal-Betrieb. In einer besonders bevorzugten Weiterbildung ist vorgesehen, dass die elektronische Steuerschaltung einen LS-Schalter mit einem leitenden und einem nicht-leitenden Schaltzustand aufweist. Der LS-Schalter ist ein Schalter der nach Masse schaltet. Durch Ansteuerung des LS-Schalters mit einem Stromimpuls wird der LS-Schalter geschlossen, d. h. in einen leitenden Zustand überführt. In dem geschlossenen Zustand ist der LS-Schalter also leitend, derart, dass das Bistabil-Ventil bestromt wird.

Bevorzugt ist der LS-Schalter damit derart ausgebildet, dass das elektropneumatische Bistabil-Ventil im leitenden Zustand des LS-Schalters in den ersten oder zweiten Schaltzustand überführbar ist und dass das elektropneumatische Bistabil-Ventil im nicht-leitenden Zustand des LS-Schalters seinen aktuellen Schaltzustand beibehält.

Ein Stromimpuls mit einer Pulsdauer von weniger als einer Sekunde reicht in der Regel aus, um den LS-Schalter zu schließen und mittels der elektronischen Steuerschaltung den Schaltzustand eines Bistabil-Ventils zu ändern. Mit Wegnahme des Stromimpulses, also mit dem Ende der Ansteuerung, schaltet der LS-Schalter automatisch wieder zurück in den geöffneten Schaltzustand. Vorteilhafterweise ist das Bistabil-Ventil durch die zeitlich begrenzte Ansteuerung des Bistabil-Ventils, außerhalb des Ansteuerungszeitraums thermisch geschützt.

Typischerweise ist ein LS-Schalter ein elektronischer Halbleiterschalter, der die Funktion eines mechanischen Schalters realisiert, indem er zur negativen Spannung schaltet (z. B. Null Volt was der Fahrzeugmasse entsprechen kann). In der bevorzugten Weiterbildung schaltet der LS-Schalter den Schaltzustand des Bistabil-Ventils, wenn die Notlösefunktion benutzt oder aktiviert wird.

In einer bevorzugten Ausführungsform ist vorgesehen, dass die elektronische Steuereinheit (ECU) die elektronische Steuerschaltung aufweist. Die elektronischen Komponenten der elektronischen Steuereinheit (ECU) und der elektronischen Steuerschaltung können z. B. gemeinsam auf einer Platine oder Leiterplatte realisiert sein oder auf separaten Platinen, die sich in einem gemeinsamen Gehäuse befinden. Die elektronische Steuerschaltung wird vorzugsweise durch die elektronische Steuereinheit (ECU) freigegeben und/oder verriegelt. Darüber hinaus können die elektronische Steuerschaltung und die elektronische Steuereinheit (ECU) voneinander elektrisch unabhängig sein. An dieser Ausführungsform ist vorteilhaft, dass ein kompaktes Design der erfindungsgemäßen elektronischen Einrichtung möglich ist.

In einer weiteren bevorzugten Ausführungsform ist vorgesehen, dass die Steuerschaltung auf einer separaten Platine implementiert und mit der elektronischen Steuereinheit (ECU) elektrisch verbunden ist. Wenn die Steuerschaltung auf einer separaten Platine von der elektronischen Steuereinheit (ECU) ausgebildet ist, sind eine Vielzahl von Architekturen der elektronischen Einrichtung zum Steuern eines elektro-pneumatischen Feststellbremskreises denkbar. Die elektronische Steuerschaltung könnte sich an einem anderen Ort im Fahrzeug als die elektronische Steuereinheit (ECU) befinden. Dadurch lässt sich das Design der elektronischen Steuerschaltung und der elektronischen Steuereinheit (ECU) individuell beeinflussen. Um die Notlösefunktion für einen Nutzer bedienungsfreundlich zu gestalten, könnte sich die elektronische Steuerschaltung an einem leicht zugänglichen Ort befinden, z. B. in der Nähe des Fahrzeugrahmens oder in der Fahrerkabine.

Es ist vorgesehen, dass die zweite Energiequelle eine externe Energiequelle ist, die sich außerhalb des Fahrzeugs befindet. Wenn sich die zweite Energiequelle außerhalb des Fahrzeugs befindet, wird in der Regel der Aufbau der Notlösefunktion weiter vereinfacht und die Zuverlässigkeit der elektronischen Steuerschaltung erhöht. Ein weiterer Vorteil ist, dass eine externe Energiequelle schneller auf ihre Funktionsfähigkeit überprüft werden kann. Wenn die zweite Energiequelle in das Fahrzeug integriert wäre, bestünde das Risiko das ein Ausfall der zweiten Energiequelle nicht rechtzeitig bemerkt werden könnte, sodass diese im Notfall ebenfalls nicht betriebsbereit ist. Eine externe Energiequelle kann wesentlich leichter gewechselt werden.

In einer weiteren bevorzugten Ausführungsform ist vorgesehen, dass die Steuerschaltung mit einer Leitung verbunden ist, die zu einem derart zugänglichen Anschluss führt, dass die zweite Energiequelle über eine Verkabelung an die Leitung anschließbar ist. Vorteilhafterweise ist es so möglich die Steuerschaltung an einem beliebigen Ort im Fahrzeug unterzubringen. Die Leitung, die die elektronische Steuerschaltung mit einem zugänglichen Anschluss verbindet kann so gemäß dem Fahrzeugdesign durch das Fahrzeug geführt werden. Der zugängliche Anschluss kann sich an einem für einen Nutzer zugänglichen Ort z. B. an der Außenseite des Fahrzeugs befinden. Die zweite Energiequelle, die sich außerhalb des Fahrzeugs befindet, kann über eine Verkabelung mit dem zugänglichen Anschluss verbunden werden. Durch die mittels einer Verkabelung angeschlossene zweite Energiequelle lässt sich die elektronische Steuerschaltung mit Energie versorgen, sodass die elektronische Steuerschaltung mittels eines Stromimpulses den Schaltzustand des Bistabil-Ventils verändern kann. Durch die Überführung des Bistabil-Ventils in dem zweiten Betriebszustand wird die Feststellbremse gelöst. Mit der gelösten Feststellbremse kann das Fahrzeug wieder bewegt und z. B. abgeschleppt werden.

In einer weiteren bevorzugten Ausführungsform ist vorgesehen, dass der zugängliche Anschluss am Fahrzeugrahmen und/oder in einer Kabine des Fahrzeugs ausgeführt ist. Der Anschluss kann zum Beispiel im Fahrzeugrahmen oder in der Fahrerkabine oder an einem weiteren einem Nutzer zugänglichen Ort am Fahrzeug angebracht sein. Durch den zugänglichen Anschluss wird vorteilhafterweise die Bedienungsfreundlichkeit für einen Nutzer der Notlösefunktion erhöht.

In einer weiteren bevorzugten Ausführungsform ist vorgesehen, dass die externe Energiequelle mittels einer Verkabelung angeschlossen werden kann, die ein Adapterkabel ist. Die externe Energiequelle kann z. B. eine Autobatterie oder ein anderer Energiespeicher sein. Über eine Verkabelung wird die Energiequelle an den zugänglichen Anschluss angeschlossen. Die Verkabelung kann z. B. ein Starterkabel oder eine alternative Verkabelung sein. Beispielsweise kann ein mobiler Reparatur- oder Abschleppdienst die externe Energiequelle mittels der Verkabelung an den zugänglichen Anschluss anschließen. Durch die elektronische Steuerschaltung wird das Bistabil-Ventil in den Betriebszustand überführt, indem die Feststellbremse gelöst ist und das Fahrzeug wieder bewegt und abgeschleppt werden kann. Denkbar ist auch, dass Notlösefunktion erst nach dem Abschleppen des Fahrzeugs in einer Werkstatt durchgeführt wird.

In einer weiteren besonders bevorzugten Ausführungsform ist vorgesehen, dass die Steuerschaltung derart ausgebildet ist, dass der Schaltzustand des elektro-pneumatischen Bistabil-Ventils während einer kurzen Zeitdauer, insbesondere der Zeitdauer eines Stromimpulses der durch die externe Energiequelle bereitgestellt wird, geändert wird.

In einer weiteren besonders bevorzugten Ausführungsform ist vorgesehen, dass das elektro-pneumatische Bistabil-Ventil gepulst überführbar ist. Insbesondere ist die elektronische Steuerschaltung ausgebildet, den Schaltzustand des elektro-pneumatischen Bistabil-Ventils mittels eines Stromimpulses zu überführen. Der Stromimpuls ist vorzugsweise durch die zweite Energiequelle bereitstellbar und insbesondere während einer Puls-Zeitdauer änderbar. Insbesondere ist das Bistabil-Ventil außerhalb der Puls-Zeitdauer thermisch geschützt. Durch den Anschluss der externen Energiequelle wird ein Stromimpuls bereitgestellt, der ausreicht den Schaltzustand des Bistabil-Ventils zu ändern. Auch wenn die externe Energiequelle angeschlossen bleibt, bleibt der Schaltzustand des Bistabil-Ventils dauerhaft bestehen. Da ein weiterer elektrischer Steuerpuls notwendig ist, um den Schaltzustand des Bistabil-Ventils zu ändern, bleibt der Schaltzustand auch nach dem Entfernen der externen Energiequelle dauerhaft bestehen. Typischerweise reicht ein Stromimpuls mit einer Pulsdauer von weniger als eine Sekunde aus, um den Schaltzustand eines Bistabil-Ventils zu ändern. Nach dem der Stromimpuls bereitgestellt wurde und der Schaltzustand des Bistabil-Ventils geändert wurde bleibt das Bistabil-Ventil in dem geänderten Schaltzustand bis ein erneuter Stromimpuls zum Ändern des Schaltzustands des Bistabil-Ventils bereitgestellt wird. Durch die zeitlich begrenzte Ansteuerung des Bistabil-Ventils, ist das Bistabil-Ventil außerhalb des Ansteuerungszeitraums thermisch geschützt.

In einer weiteren bevorzugten Ausführungsform ist vorgesehen, dass der zugängliche Anschluss wenigstens vier Kontakte aufweist, wobei einem ersten Kontakt der erste Schaltzustand des elektro-pneumatischen Bistabil-Ventils zugeordnet ist, einem zweiten Kontakt der zweite Schaltzustand des elektropneumatischen Bistabil-Ventils zugeordnet ist, einem dritten Kontakt die Überführung des Schaltzustand des elektro-pneumatischen Bistabil-Ventils in den jeweils anderen Schaltzustand zugeordnet ist und einem vierten Schaltzustand die Anbindung an ein Massepotential zugeordnet ist.

Um die Sicherheit der Notlösefunktion zu erhöhen ist es vorteilhaft, dass ein entsprechender zugänglicher Anschluss wenigstens vier Kontakte aufweist. Um den Schaltzustand des Bistabil-Ventils zu ändern ist vorgesehen, dass eine externe Energiequelle mittels einer Verkabelung mit jeweils zwei Kontakten des zugänglichen Anschlusses verbunden wird.

Ein erster Kontakt ist dem ersten Schaltzustand des elektro-pneumatischen Bistabil-Ventils zugeordnet und ein zweiter Kontakt ist dem zweiten Schaltzustand des elektro-pneumatischen Bistabil-Ventils zugeordnet. Durch den Anschluss einer Energiequelle an einen entsprechend dafür ausgebildeten Kontakt wird eine Spannungsversorgung für das Bistabil-Ventil bereitgestellt. Um den Schaltzustand des Bistabil-Ventils in den jeweils anderen stabilen Schaltzustand zu überführen sollte entweder der erste oder der zweite Kontakt und der dritte Kontakt, der der Überführung des Schaltzustands des elektropneumatischen Bistabil-Ventils in den jeweils anderen Schaltzustand zugeordnet ist, an die Energiequelle angeschlossen werden.

Um den Schaltzustand des Bistabil-Ventils zu ändern sollte zum einen eine positive Spannung zwischen einem positiven Anschluss des Bistabil-Ventils und der der Masse der elektronischen Steuereinheit (ECU) oder der elektronischen Steuerschaltung anliegen. Zum anderen sollte eine positive Spannung an dem Kontakt zur Überführung des Schaltzustands des elektro-pneumatischen Bistabil-Ventils in den jeweils anderen Schaltzustand angeschlossen werden. Dadurch wird ein Stromimpuls mit einer bestimmten Zeitdauer zum Ansteuern des Bistabil-Ventils bereitgestellt. Durch die zeitliche Begrenzung des Stromimpulses zur Ansteuerung und somit zum Umschalten des Bistabil-Ventils, ist das Bistabil-Ventil während und nach der Umschaltung thermisch geschützt. Das Bistabil-Ventil ist auch dann noch, mittels einer Polschutzdiode, thermisch geschützt, wenn die externe Energiequelle an die elektronische Steuerschaltung angeschlossen bleibt.

Durch eine Änderung des Schaltzustands des Bistabil-Ventils kann die Feststellbremse abhängig von dem Schaltzustand des Bistabil-Ventils entsprechend gelöst oder festgestellt werden. Nachdem die Feststellbremse eines Fahrzeugs gelöst wurde, z. B. um es abzuschleppen, kann durch den Anschluss einer Energiequelle mit einer Verkabelung an den jeweils anderen beiden Kontakt der Schaltzustand des Bistabil-Ventils wieder in seinen ursprünglichen Zustand überführt werden, sodass die Feststellbremse wieder festgestellt ist.

Gemäß einem zweiten Aspekt der Erfindung wird die eingangs genannte Aufgabe durch ein elektro-pneumatisches Feststellbremssystem gelöst. Das elektro-pneumatische Feststellbremssystem weist wenigstens einen elektropneumatischen Feststellbremskreis für ein Fahrzeug, und eine elektronische Einrichtung zum Steuern des elektro-pneumatischen Feststellbremskreises auf. Der elektro-pneumatische Feststellbremskreis ist zum Aktuieren wenigstens einer an den Feststellbremskreis pneumatisch angeschlossenen Feststellbremse ausgebildet. Der Feststellbremskreis weist wenigstens ein elektro-pneumatisches Bistabil-Ventil auf, das mittels der elektronischen Steuereinheit (ECU) in einem ersten Betriebszustand in einen ersten Schaltzustand und in einem zweiten Betriebszustand in einen zweiten Schaltzustand überführbar ist. Der Feststellbremskreis ist derart ausgebildet, dass die Feststellbremse in dem ersten Betriebszustand festgestellt ist und in dem zweiten Betriebszustand gelöst ist. Die elektronische Steuereinheit (ECU) ist durch eine erste Energiequelle betreibbar. Die elektronische Einrichtung ist nach wenigstens einer der vorherigen Weiterbildungen ausgebildet.

Gemäß einem dritten Aspekt der Erfindung wird die eingangs genannte Aufgabe durch ein Fahrzeug mit wenigstens einem elektro-pneumatischen Feststellbremssystem gelöst, wobei das elektro-pneumatische Feststellbremssystem nach dem zweiten Aspekt der Erfindung ausgebildet ist.

Gemäß einem vierten Aspekt betrifft die Erfindung ein Verfahren zum Steuern eines elektro-pneumatischen Feststellbremskreises für ein Fahrzeug, mittels einer elektronischen Einrichtung, die nach wenigstens einer der vorher genannten Weiterbildungen ausgebildet ist. Der elektro-pneumatische Feststellbremskreis ist zum Aktuieren wenigstens einer an den Feststellbremskreis pneumatisch angeschlossenen Feststellbremse ausgebildet. Der Feststellbremskreis weist wenigstens ein elektro-pneumatisches Bistabil-Ventil auf, das mittels der elektronischen Steuereinheit (ECU) in einem ersten Betriebszustand in einen ersten Schaltzustand und in einem zweiten Betriebszustand in einen zweiten Schaltzustand überführbar ist. Der Feststellbremskreis ist derart ausgebildet, dass die Feststellbremse in dem ersten Betriebszustand festgestellt ist und in dem zweiten Betriebszustand gelöst ist. Die elektronische Steuereinheit (ECU) wird durch eine erste Energiequelle betrieben. Das Verfahren ist dadurch gekennzeichnet, dass der Schaltzustand des elektro-pneumatischen Bistabil-Ventils durch eine Steuerschaltung geändert wird und dadurch, dass die Steuerschaltung durch eine zweite Energiequelle betrieben wird.

Es ist vorgesehen, dass die zweite Energiequelle eine externe Energiequelle ist, die sich außerhalb des Fahrzeugs befindet, und die durch eine Verkabelung an einen zugänglichen Anschluss angeschlossen wird.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- FIG. 1:: eine bevorzugte Ausführungsform eines elektro-pneumatisches Feststellbremssystem mit einer Elektronischen Einrichtung mit einer elektronischen Steuereinheit zum Steuern eines elektro-pneumatischen Feststellbremskreises für ein Fahrzeug in einer schematischen Darstellung;
- FIG. 2:: das Ausführungsbeispiel der FIG. 1 in einem elektro-pneumatischen Schaltbild;
- FIG. 3A:: eine detaillierte Darstellung einer bevorzugt realisierten Notumschaltung für die bevorzugte Ausführungsform eines elektro-pneumatischen Feststellbremssystems;
- FIG. 3B:: eine bevorzugte Ausführungsform eines zugänglichen Anschlusses mit Kontakten.

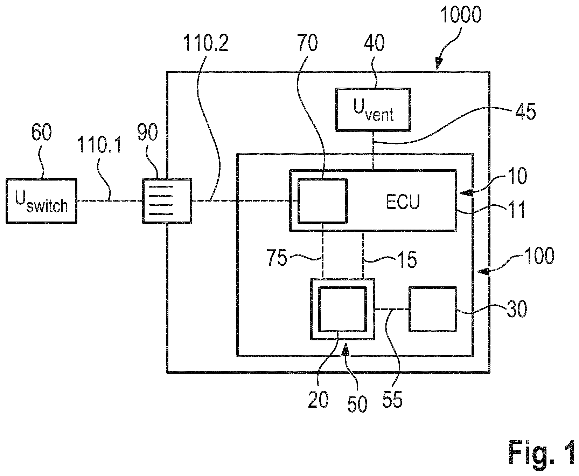

FIG. 1 zeigt eine schematische Darstellung eines allgemein bevorzugten Feststellbremssystems 100, das in ein Fahrzeug 1000 integriert ist. In der gezeigten Darstellung umfasst das Feststellbremssystem 100 einen elektropneumatischen Feststellbremskreis 50, der ein Bistabil-Ventil 20 umfasst. In einer hier nicht gezeigten Darstellung umfasst ein Feststellbremskreis eine Anzahl von pneumatischen Leitungen und Ventilen. Der Feststellbremskreis 50 ist mittels einer Pneumatikleitung 55 zur Versorgung der Feststellbremse mit der Feststellbremse 30 verbunden. In einer hier nicht gezeigten Darstellung ist ein Feststellbremskreis pneumatisch mit einem Federspeicheranschluss verbunden über den eine Anzahl von Federspeicherbremszylindern mit Druckluft beaufschlagt werden können, um so eine Feststellbremse zu lösen.

Zum Steuern des elektro-pneumatischen Feststellbremskreises 50 ist in der gezeigten Darstellung eine elektronische Steuereinheit (ECU) 11 vorgesehen. Die elektronische Steuereinheit (ECU) 11 ist mittels einer Anschlussleitung 15 elektrisch mit dem Feststellbremskreis 50 verbunden. In einer hier nicht gezeigten Darstellung ist eine Anzahl von elektro-pneumatischen Ventilen elektronisch mit einer elektronischen Steuereinheit verbunden, die die Ventilfunktion steuert. In der gezeigten Darstellung ist die elektronische Steuereinheit (ECU) 11 Bestandteil einer elektronischen Einrichtung 10 die weiterhin eine elektronische Steuerschaltung 70 aufweist. In der gezeigten Darstellung ist die elektronische Steuerschaltung 70 in die elektronische Steuereinheit (ECU) 11 integriert. In einer hier nicht gezeigten Ausführungsform ist eine elektronische Steuerschaltung unabhängig von elektronischen Steuereinheit, z.B. auf separaten Platinen, ausgebildet. In einer solchen Ausführungsform kann sich eine elektronische Steuerschaltung an einem beliebigen Ort innerhalb eines Fahrzeugs befinden, was vielseitige Möglichkeiten im Design einer elektronischen Einrichtung zum Steuern eines Feststellbremskreises ermöglicht.

In der gezeigten Darstellung ist die elektronische Steuerschaltung 70 über elektronische Anschlussleitungen für die beiden Spulen M1 und M2 75 elektrisch mit den beiden Spulen M1 und M2 des Bistabil-Ventils 20 verbunden. Die elektronische Steuerschaltung 70 ist dafür vorgesehen, dass ein Schaltzustand des Bistabil-Ventils 20 unabhängig von der elektronischen Steuereinheit (ECU) 11 verändert werden kann. In der gezeigten Darstellung wird die elektronische Steuereinheit (ECU) 11 von einer ersten Energiequelle 40 über eine elektrische Hauptenergieleitung, Uᵥₑₙₜ 45 versorgt. Die elektronische Steuerschaltung 70 ist über eine Leitung 110.2 die für die elektrische Hilfsenergieversorgung vorgesehen ist mit einem zugänglichen Anschluss mit Schalter 90 verbunden. Die Leitung 110.2 ist derart durch das Fahrzeug 1000 geführt, dass der zugängliche Anschluss mit Schalter 90 von einem Nutzer erreicht werden kann. In einem hier nicht gezeigten Ausführungsbeispiel kann sich ein zugänglicher Anschluss z. B. in einer Fahrerkabine eines Fahrzeugs befinden oder in den Rahmen eines Fahrzeugs integriert sein.

In der gezeigten Darstellung wird die elektronische Steuerschaltung 70 durch eine zweite Energiequelle 60 versorgt. Die zweite Energiequelle 60 befindet sich außerhalb des Fahrzeugs 1000 und ist eine externe Energiequelle. In einer hier nicht gezeigten Ausführungsform kann sich eine zweite Energiequelle auch innerhalb eines Fahrzeugs befinden. In der gezeigten Darstellung wird die zweite Energiequelle 60 mittels einer Verkabelung 110 für eine elektrische Hilfsenergieversorgung an den zugänglichen Anschluss mit Schalter 90 angeschlossen. Die Energieversorgung der elektronischen Steuerschaltung 70 ist also unabhängig von der ersten Energiequelle 40, sodass bei einem Ausfall der ersten Energiequelle 40 oder bei einem Defekt der elektronischen Steuereinheit (ECU) 11 die elektronische Steuerschaltung 70 weiterhin funktionsfähig bleibt. Für den Fall, dass die erste Energiequelle 40 ausfällt oder die elektronische Steuereinheit (ECU) 11 einen Defekt aufweist kann der Schaltzustand des Bistabil-Ventils 20 weiterhin mittels der durch die zweite Energiequelle 60 versorgte elektronische Steuerschaltung 70 verändert werden. Es lässt sich also die Feststellbremse 30 durch die elektronische Steuerschaltung 70 unabhängig von der elektronischen Steuereinheit (ECU) 11 lösen oder auch feststellen.

In einer hier nicht-gezeigten Darstellung umfasst ein Feststellbremssystem eine elektronische Steuereinheit (ECU), die über Leitungen mit einem Handbedienelement , und einer ersten Energiequelle verbunden ist. Eine weitere Leitung dient als Bus zur Übertragung von Daten zur Motorsteuerung. Ein elektro-pneumatisches Feststellbremssystem kann z.B. durch einen Druckluftvorrat mit Druckluft versorgt werden und kann weiterhin über eine pneumatische Steuerleitung mit einem Anhängersteuerventil verbunden sein.

Eine solche elektronische Steuerschaltung kann durch eine elektronische Steuereinheit (ECU) freigegeben und/oder verriegelt werden. Darüber hinaus können eine elektronische Steuerschaltung und eine elektronische Steuereinheit (ECU) voneinander elektrisch unabhängig sein. Eine elektronische Steuerschaltung kann über eine Leitung für die elektrische Hilfsenergieversorgung mit einem zugänglichen Anschluss mit Schalter verbunden sein. Mittels einer Verkabelung für eine elektrische Hilfsenergieversorgung kann eine externe Energiequelle an einen zugänglichen Anschluss mit Schalter angeschlossen werden und so eine elektronische Steuerschaltung mit Energie versorgt werden. Die Energieversorgung einer elektronischen Steuerschaltung ist also unabhängig von einer ersten Energiequelle. Für den Fall, dass eine erste Energiequelle ausfällt oder eine elektronische Steuerschaltung (ECU) ausfällt, ist eine elektronische Steuerschaltung weiterhin funktionsfähig und kann mittels einer externen Energiequelle mit Energie versorgt werden. Ein hier nicht-gezeigtes elektro-pneumatisches Feststellbremssystem kann weiterhin über pneumatische Leitungen mit Federspeicherbremszylindern verbunden sein, die je nach Be- oder Entlüftungszustand eine Betriebsbremse entsprechend lösen oder feststellen.

FIG. 2 zeigt konkret ein Schaltbild des in FIG. 1 schematisch dargestellten bevorzugten Feststellbremssystems 100 mit einem elektro-pneumatischen Bistabil-Ventil 20. Die Verwendung eines solchen Bistabil-Ventils 20 hat den Vorteil, dass bei einem Ausfall oder einer Störung der fahrzeugseitigen Spannungsversorgung das Bistabil-Ventil seinen zuletzt eingestellten Schaltzustand beibehält. Dementsprechend hat das Bistabil-Ventil 20 zwei Magnetspulen M1, M2 mittels denen der Ventilkörper ansteuerbar ist, um zwischen einem ersten und einem zweiten Schaltzustand bewegt zu werden - die Magnetspulen M1, M2 sind hier auch als elektrischer Teil 77.1, 77.2 des elektro-pneumatischen Bistabil-Ventils erkennbar.

Eine grundsätzliche Funktionsweise eines Bistabil-Ventils ist beispielsweise EP 1 504 975 B1 entnehmbar und auch bei diesem Ausführungsbeispiel anwendbar.

Vorliegend verbindet das Bistabil-Ventil 20 in dem in FIG. 2 gezeigten ersten Schaltzustand einen Druckluftvorrat 51 über ein Relaisventil 35 mit der Feststellbremse 30. In einem zweiten Schaltzustand verbindet das Bistabil-Ventil 20 zur Freigabe bzw. Entlüftung der Feststellbremse 30 diese mit einem Luftauslass 80. Das Bistabil-Ventil 20 ist über geeignete elektronische Anschlussleitungen 75 für die Spulen M1 und M2 des Bistabil-Ventils 20 mit der elektronischen Steuereinheit (ECU) 11 verbunden.

Das Feststellbremssystem 100 umfasst demnach konkret eine elektronische Einrichtung 10 (ECU) und einen elektro-pneumatischen Feststellbremskreis 50. Die elektronische Einrichtung 10 umfasst die elektronische Steuereinheit (ECU) 11 und die elektronische Steuerschaltung 70, wobei die elektronische Steuerschaltung 70 in dem gezeigten Ausführungsbeispiel in die elektronische Steuereinheit (ECU) 11 integriert ist. Das heißt die elektronische Steuereinheit (ECU) 11 und die elektronische Steuerschaltung 70 befinden sich besonders vorteilhaft jedenfalls auf einer gemeinsamen Platine. Die elektronische Steuerschaltung 70 wird vorzugsweise durch die elektronische Steuereinheit (ECU) 11 freigegeben und/oder verriegelt. Darüber hinaus sind die elektronische Steuerschaltung 70 und die elektronische Steuereinheit (ECU) 11 voneinander elektrisch unabhängig. Die elektronische Steuereinheit (ECU) 11 ist zum Steuern des elektro-pneumatischen Feststellbremskreises 50 ausgebildet. Von der elektronischen Steuerschaltung 70 führt eine Leitung 110.2 für die elektrische Hilfsenergieversorgung zu einem zugänglichen Anschluss mit Schalter 90. In einer hier nicht gezeigten Darstellung kann eine externe Energiequelle mittels einer Verkabelung an einen zugänglichen Anschluss angeschlossen werden.

Die elektronische Steuereinheit (ECU) 11 ist in der gezeigten Darstellung somit über elektrische Leitungen mit einem elektro-pneumatischen Bistabil-Ventil 20 verbunden. In einer hier nicht-gezeigten Darstellung kann ein 2/2-Wegeventil als Halteventil und ein 3/2-Wegeventil 22 als Anhängersteuerventil vorgesehen sein. Ein hier nicht-gezeigtes 3/2-Wegeventil wäre pneumatisch über einen Anschluss mit einem Anhängersteuerventil verbunden. Das gezeigte Bistabil-Ventil 20 dient zum Be- und Entlüften einer Anzahl von Federspeicherbremszylindern 31, 32, 33, 34. Je nach Be- oder Entlüftungszustand der Federspeicherbremszylindern 31, 32, 33, 34 ist die Feststellbremse 30 entsprechend gelöst oder festgestellt. Der Anzahl von Federspeicherbremszylindern 31, 32, 33, 34 ist ein Relaisventil 35 vorgeschaltet, um die Anzahl von Federspeicherbremszylinder 31, 32, 33, 34 über Federspeicheranschlüsse 36.1 und 36.2 mit Druckluft zu versorgen. Der elektro-pneumatische Feststellbremskreis 50 wird durch einen Druckluftvorrat 51 mit Druckluft versorgt. Der elektro-pneumatische Feststellbremskreis 50 weist einen Luftauslass 80 zum Ablassen von Druckluft auf.

Die elektrische Steuereinheit 70 ist derart ausgebildet, dass der Schaltzustand des Bistabil-Ventils mittels der elektrischen Steuereinheit 70 verändert werden kann. Dies ist insbesondere möglich, wenn die elektronische Steuereinheit (ECU) 11 nicht funktionsfähig ist. Durch die in der Darstellung gezeigte Ausführungsform ist ein Lösen der Feststellbremse 30 auch dann möglich, wenn die elektronische Steuereinheit (ECU) 11 einen Defekt aufweist.

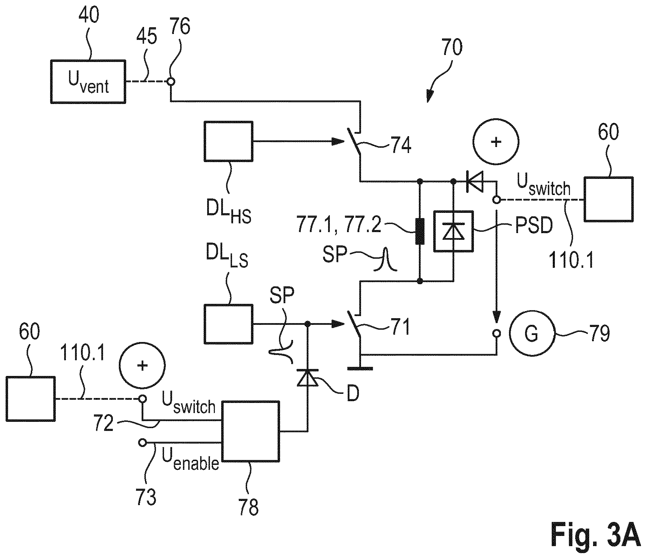

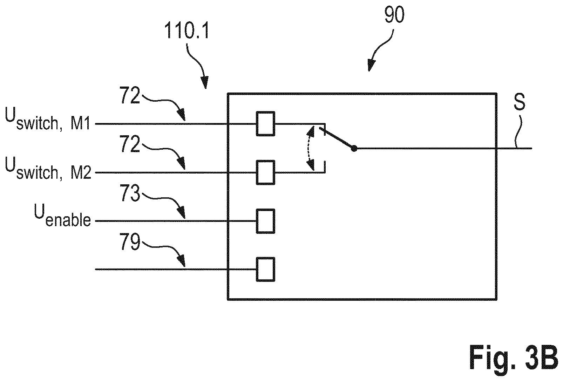

FIG. 3A zeigt eine detaillierte Darstellung der bevorzugten Notumschaltung. Mittels einer Verkabelung 110.1 für eine elektrische Hilfsenergieversorgung kann eine zweite Energiequelle 60 einen ersten Kontakt, U_{switch} 72 und einen zweiten Kontakt U_{enable} 73 des zugänglichen Anschlusses bevorzugt mittels eines in FIG. 3B gezeigten Schalters 90 angeschlossen werden.

In der in FIG. 3B gezeigten Ausführungsform umfasst ein zugänglicher Anschluss insgesamt vier Kontakte. Im Normalfall wird mittels einer digitalen Logik DL_{HS} ein HS (High Side)-Schalter 74 geschlossen und ein Steuersignal an einen entsprechenden Anschluss Uᵥₑₙₜ 76 übertragen. In dem hier gezeigten Ausführungsbeispiel ist ein entsprechender Anschluss elektrisch mit einem Bistabil-Ventil verbunden, sodass ein Steuerpuls einer elektrischen Steuereinheit zur Notumschaltung des Bistabil-Ventils genutzt werden kann.

Zum Not-Umschalten eines Bistabil-Ventils 20 wird z. B. eine positive Spannung an einen ersten Kontakt, U_{switch} 72 angelegt. Wird an einen weiteren Kontakt, U_{enable} 73 ebenfalls eine positive Spannung angelegt, wird mittels einer Schaltung 78 (Not-Set/Reset EPH-Bremse) ein Spannungspuls SP bereitgestellt mit dem ein LS-Schalter 71 für eine definierte Zeitdauer eines Spannungspuls SP, (typischerweise unter 1 00ms), angesteuert, sodass der Stromkreis der für die Notumschaltung für diese Zeitdauer geschlossen ist.

Durch die zweite Energiequelle 60 wird also ein Stromimpuls über die Schaltung 78 (Not-Set/Reset EPH-Bremse) für die elektronische Steuerschaltung 70 bereitgestellt. Wird der LS (Low Side)-Schalter 71 mittels einer digitalen Logikeinheit DL_{LS} geschaltet geht der Spannungspuls SP auf einen hier dargestellten elektrischen Teil 77.1 (die Magnetspule M1) des Bistabil-Ventils. Die Polschutzdiode PSD ist eine Freilaufdiode und dient zum Schutz vor einer Überspannung beim Abschalten einer induktiven Last. Die Last ist durch die zeitlich begrenzte Ansteuerung thermisch geschützt. Im geschlossenen Zustand des LS-Schalters 71 wird der Schaltzustand der Magnetspule 77.1 also geändert.

In der gezeigten Darstellung der FIG. 3A ist lediglich eine Notumschaltung für eine Magnetspule eines Bistabil-Ventils 20 gezeigt. Für die zweite Magnetspule M2 des zweiten elektrischen Teils 77.2 des Bistabil-Ventils ist eine analoge Notumschaltung wie in FIG. 3A gezeigt vorgesehen.

Nach einer definierten Zeitdauer, die durch die Dauer des Impulses der Ansteuerung gegeben ist, wird der LS-Schalter 71 wieder geöffnet und in den nicht-leitenden Schaltzustand überführt. Wenn der LS-Schalter in dem nicht-leitenden Schaltzustand ist, ist die Notlösefunktion geblockt. Durch die zeitliche Begrenzung des Impulses, also der Ansteuerung, ist ein Bistabil-Ventil thermisch geschützt.

Die gezeigte Notumschaltung ist insbesondere dann von Interesse, wenn die erste Energiequelle 40 ausgefallen ist oder die bereitgestellte Energie der ersten Energiequelle 40 nicht ausreicht um den Schaltzustand eines hier nichtgezeigten Bistabil-Ventils zu ändern.

FIG. 3B zeigt eine bevorzugte Ausführungsform eines zugänglichen Anschlusses mit Schalter 90. Mittels einer hier nicht-gezeigten Leitung für eine elektrische Hilfsenergieversorgung kann der zugängliche Anschluss mit Schalter 90 mit einer hier nichtgezeigten und z. B wie in FIG. 3A beschriebenen elektronischen Steuerschaltung verbunden sein.

Der zugängliche Anschluss mit Schalter 90 weist vier Kontakte auf: Einen Massekontakt (G) 79, einen U_{enable} Kontakt 73 sowie einen U_{switch} Kontakt 72 zum Schalten der Magnetspule M1 und einen U_{switch} Kontakt 72 zum Schalten der Magnetspule M2 - die Kontakte werden über einen externen Schalter S ausgewählt. Zum Schalten eines hier nicht-gezeigten Bistabil-Ventils wird eine Verkabelung 110.1 für eine elektrische Hilfsenergieversorgung also (ausgewählt per Schalter S) entweder an den U_{switch} Kontakt 72 zum Schalten der Magnetspule M1 oder an den U_{switch} Kontakt 72 zum Schalten der Magnetspule M2 angeschlossen.

In der gezeigten Darstellung ist ein Anschluss einer Verkabelung 110.1 für eine elektrische Hilfsenergieversorgung an den U_{switch} Kontakt 72 zum Schalten der Magnetspule M1 angedeutet. Um ein Bistabil-Ventil zu schalten, muss eine Verkabelung 110.1 für eine elektrische Hilfsenergieversorgung weiterhin mit dem U_{enable} Kontakt verbunden werden.

Ein Nutzer der Notfallumschaltung kann also über den Schalter S entscheiden welche der beiden Magnetspulen eines Bistabil-Ventils geschaltet werden soll. Hierfür kann ein Schalter mit einem Taster verbunden sein, der sich z.B. in der Fahrerkabine eines Fahrzeugs befinden kann. Dies führt zu einer bevorzugten doppelten Sicherung des Schaltvorgangs (Anschluss der zweiten externen Energiequelle 60 und Betätigen des Schalters S).

### Bezugszeichenliste

- 10: elektronische Einrichtung

- 11: elektronische Steuereinheit (ECU)
- 15: Anschlussleitung
- 20: elektro-pneumatisches Bistabil-Ventil
- 30: Feststellbremse
- 31, 32, 33, 34: Federspeicherbremszylindern
- 35: Relaisventil
- 36.1, 36.2: Federspeicheranschlüsse
- 37, 38: Betriebsbremsen
- 40: erste Energiequelle, Uᵥₑₙₜ
- 45: elektrische Hauptenergieleitung, Uᵥₑₙₜ
- 50: elektro-pneumatischer Feststellbremskreis
- 51: Druckluftvorrat
- 55: Pneumatikleitung zur Versorgung der Feststellbremse
- 60: zweite externe Energiequelle, U_{switch}
- 70: elektronische Steuerschaltung
- 71: LS-Schalter
- 72: U_{switch} - Kontakt
- 73: U_{enable} - Kontakt
- 74: HS-Schalter
- 75: elektronische Anschlussleitung für die Spulen M1 und M2 des Bistabil-Ventils
- 76: Bistabil-Ventil Anschluss Uᵥₑₙₜ
- 77.1, 77.2: Spulen M1, M2 des Bistabil-Ventils
- 78: Not-Set/Reset EPH-Bremse zur Umsetzung eines Spannungspulses aus U_{switch}
- 79: Masse - Kontakt, G
- 80: Luftauslass
- 90: zugänglicher Anschluss mit Schalter
- 100: Feststellbremssystems
- 110.1,: Verkabelung für eine elektrische Hilfsenergieversorgung, U_{switch}
- 110.2: Leitung elektrische Hilfsenergieversorgung, U_{switch}
- 1000: Fahrzeug
- SP: Spannungspuls U_{switch}
- S: Schalter
- D: Diode
- PSD: Polschutzdiode

## Patentansprüche

1. Elektronische Einrichtung (10) mit einer elektronischen Steuereinheit (ECU, 11) zum Steuern eines elektro-pneumatischen Feststellbremskreises (50) für ein Fahrzeug (1000), wobei der Feststellbremskreis (50) zum Aktuieren wenigstens einer an den Feststellbremskreis pneumatisch angeschlossenen Feststellbremse (30) ausgebildet ist, und
- der Feststellbremskreis (50) wenigstens ein elektro-pneumatisches Bistabil-Ventil (20) aufweist, das mittels der elektronischen Steuereinheit (ECU, 11) in einem ersten Betriebszustand in einen ersten Schaltzustand und in einem zweiten Betriebszustand in einen zweiten Schaltzustand überführbar ist, und
- der Feststellbremskreis (50) derart ausgebildet ist, dass die Feststellbremse (30) in dem ersten Betriebszustand festgestellt ist und in dem zweiten Betriebszustand gelöst ist, wobei
- die elektronische Steuereinheit (ECU, 11) durch eine erste Energiequelle (40) betreibbar ist,
wobei die elektronische Einrichtung (10) eine von einer zweiten Energiequelle (60) betreibbare elektronische Steuerschaltung (70) aufweist, mittels welcher das elektropneumatische Bistabil-Ventil (20) in den ersten oder zweiten Schaltzustand überführbar ist,
**dadurch gekennzeichnet, dass** die zweite Energiequelle (60) eine externe, sich außerhalb des Fahrzeugs (1000) befindende Energiequelle ist.

2. Elektronische Einrichtung (10) nach Anspruch 1,
**dadurch gekennzeichnet, dass**
die elektronische Steuereinheit (ECU, 11) die elektronische Steuerschaltung (70) aufweist.

3. Elektronische Einrichtung (10) nach Anspruch 1,
**dadurch gekennzeichnet, dass**
die elektronische Steuerschaltung (70) unabhängig von elektronischen Steuereinheit (ECU, 11) ausgebildet ist.

4. Elektronische Einrichtung (10) nach einem der Ansprüche 1 bis 3,
**dadurch gekennzeichnet, dass**
die elektronische Steuerschaltung (70) einen LS (Low Side)-Schalter mit einem leitenden und einem nicht-leitenden Schaltzustand aufweist, wobei mittels der elektronische Steuerschaltung (70) der Schaltzustand des LS-Schalters geändert werden kann, insbesondere zusätzlich zu einer Steuerschaltung (70) für einen HS (High Side)-Schalter für einen Normal-Betrieb.

5. Elektronische Einrichtung (10) nach Anspruch 4,
**dadurch gekennzeichnet, dass**
das elektro-pneumatische Bistabil-Ventil (20) in dem leitenden Zustand des LS-Schalters in den ersten oder zweiten Schaltzustand überführbar ist und dass das elektro-pneumatische Bistabil-Ventil (20) in dem nicht-leitenden Zustand des LS-Schalters thermisch geschützt ist.

6. Elektronische Einrichtung (10) nach einem der Ansprüche 1 bis 5,
**dadurch gekennzeichnet, dass**
ein erster LS-Schalter mit einem ersten elektrischen Teil (77.1), insbesondere einer ersten Magnetspule (M1), des elektropneumatischen Bistabil-Ventils (20) steuernd verbunden ist und ein zweiter LS-Schalter mit einem zweiten elektrischen Teil (77.2), insbesondere einer zweiten Magnetspule (M2), des elektro-pneumatischen Bistabil-Ventils (20) steuernd verbunden ist, wobei der erste oder zweite LS-Schalter für eine NotUmschaltung betätigbar ist, insbesondere der erste oder zweite LS-Schalter über einen externen Schalter und eine digitale Logik frei gegeben wird.

7. Elektronische Einrichtung (10) nach einem der Ansprüche 1 bis 6,
**dadurch gekennzeichnet, dass**
die elektronische Steuerschaltung (70) mit einer Leitung (110.2) für eine elektrische Hilfsenergieversorgung verbunden ist, die zu einem derart zugänglichen Anschluss mit Schalter (90) führt, und dass die zweite Energiequelle (60) über eine Verkabelung (110.1) für eine elektrische Hilfsenergieversorgung an die Leitung (110.2) anschließbar ist.

8. Elektronische Einrichtung (10) nach Anspruch 7,
**dadurch gekennzeichnet, dass**
der zugängliche Anschluss mit Schalter (90) einer mit der elektronischen Steuerschaltung (70) verbundenen Leitung (110.2) für eine elektrische Hilfsenergieversorgung am Fahrzeugrahmen und/oder in einer Kabine des Fahrzeugs (1000) ausgeführt ist.

9. Elektronische Einrichtung (10) nach einem der Ansprüche 1 bis 8,
**dadurch gekennzeichnet, dass**
die externe Energiequelle (70) mittels einer Verkabelung (110.1) für eine elektrische Hilfsenergieversorgung anschließbar ist, insbesondere die Verkabelung ein Adapterkabel oder ein Starterkabel aufweist.

10. Elektronische Einrichtung (10) nach einem der Ansprüche 1 bis 9,
**dadurch gekennzeichnet, dass**
das elektro-pneumatische Bistabil-Ventil (20) gepulst überführbar ist, insbesondere die elektronische Steuerschaltung (70) ausgebildet ist, den Schaltzustand des elektro-pneumatischen Bistabil-Ventils (20) mittels eines Stromimpulses zu überführen, vorzugsweise wobei der Stromimpuls durch die zweite Energiequelle (60) bereitstellbar ist, insbesondere während einer Puls-Zeitdauer änderbar ist, insbesondere derart dass das Bistabil-Ventil außerhalb der Puls-Zeitdauer thermisch geschützt ist.

11. Elektronische Einrichtung (10) nach Anspruch 7 oder nach einem der Ansprüche 8 bis 10, wenn dieser die Merkmale nach Anspruch 7 beansprucht,
**dadurch gekennzeichnet, dass**
der zugängliche Anschluss mit Schalter (90) wenigstens vier Kontakte aufweist, wobei einem ersten Kontakt der erste Schaltzustand des elektro-pneumatischen Bistabil-Ventils (20) zugeordnet ist, einem zweiten Kontakt der zweite Schaltzustand des elektro-pneumatischen Bistabil-Ventils (20) zugeordnet ist, einem dritten Kontakt die Überführung des Schaltzustands des
elektro-pneumatischen Bistabil-Ventils (20) in den jeweils anderen Schaltzustand zugeordnet ist und einem vierten Schaltzustand die Anbindung an ein Massepotential zugeordnet ist.

12. Elektro-pneumatisches Feststellbremssystem (100) aufweisend wenigstens einen elektro-pneumatischen Feststellbremskreis (50) für ein Fahrzeug (1000), und eine elektronische Einrichtung (10) nach einem der Ansprüche 1 bis 11
zum Steuern des elektro-pneumatischen Feststellbremskreises (50), wobei der elektro-pneumatische Feststellbremskreis (50) zum Aktuieren wenigstens einer an den Feststellbremskreis pneumatisch angeschlossenen Feststellbremse (30) ausgebildet ist, und
- der Feststellbremskreis (50) wenigstens ein elektro-pneumatisches Bistabil-Ventil (20) aufweist, das mittels der elektronischen Steuereinheit (ECU, 11) in einem ersten Betriebszustand in einen ersten Schaltzustand und in einem zweiten Betriebszustand in einen zweiten Schaltzustand überführbar ist, und
- der Feststellbremskreis (50) derart ausgebildet ist, dass die Feststellbremse (30) in dem ersten Betriebszustand festgestellt ist und in dem zweiten Betriebszustand gelöst ist, wobei
- die elektronische Steuereinheit (ECU, 11) durch eine erste Energiequelle (40) betreibbar ist.

13. Fahrzeug (1000) mit wenigstens einem elektro-pneumatischen Feststellbremssystem (100), das nach Anspruch 12 ausgebildet ist.

14. Verfahren zum Steuern eines elektro-pneumatischen Feststellbremskreises (50) für ein Fahrzeug (1000), mittels einer elektronischen Einrichtung (10), die nach wenigstens einem der Ansprüche 1 bis 11 ausgebildet ist, wobei der elektropneumatische Feststellbremskreis (50) zum Aktuieren wenigstens einer an den Feststellbremskreis pneumatisch angeschlossenen Feststellbremse (30) ausgebildet ist, und
- der Feststellbremskreis (50) wenigstens ein elektro-pneumatisches Bistabil-Ventil (20) aufweist, das mittels der elektronischen Steuereinheit (ECU, 11) in einem ersten Betriebszustand in einen ersten Schaltzustand und in einem zweiten Betriebszustand in einen zweiten Schaltzustand überführbar ist, und
- der Feststellbremskreis (50) derart ausgebildet ist, dass die Feststellbremse (30) in dem ersten Betriebszustand festgestellt ist und in dem zweiten Betriebszustand gelöst ist, wobei
- die elektronische Steuereinheit (ECU, 11) durch eine erste Energiequelle (40) betreibbar ist,
wobei das Verfahren **dadurch gekennzeichnet ist, dass**
der Schaltzustand des elektro-pneumatischen Bistabil-Ventils (20) durch eine elektronische Steuerschaltung (70) geändert wird und dadurch, dass die Steuerschaltung (70) durch die zweite Energiequelle (60) betrieben wird.

15. Verfahren nach Anspruch 14, wobei die zweite Energiequelle (60) durch eine Verkabelung (110) für eine elektrische Hilfsenergieversorgung an einen zugänglichen Anschluss mit Schalter (90) angeschlossen wird.

## Claims

1. An electronic device (10) comprising an electronic control unit (ECU, 11) for controlling an electropneumatic parking brake circuit (50) for a vehicle (1000), the parking brake circuit (50) being designed to actuate at least one parking brake (30) which is pneumatically connected to the parking brake circuit, and
- the parking brake circuit (50) having at least one bistable electropneumatic valve (20) which can be transferred by means of the electronic control unit (ECU, 11) to a first switching state in a first operating state and to a second switching state in a second operating state, and
- the parking brake circuit (50) being designed such that the parking brake (30) is applied in the first operating state and is released in the second operating state,
- it being possible for the electronic control unit (ECU, 11) to be operated by a first power source (40),
the electronic device (10) having an electronic control circuit (70) which can be operated by a second power source (60) and by means of which the bistable electropneumatic valve (20) can be transferred to the first or the second switching state,
**characterized in that** the second power source (60) is an external power source located outside the vehicle (1000).

2. The electronic device (10) according to claim 1,
**characterized in that**
the electronic control unit (ECU, 11) has the electronic control circuit (70).

3. The electronic device (10) according to claim 1,
**characterized in that**
the electronic control circuit (70) is formed independently of the electronic control unit (ECU, 11).

4. The electronic device (10) according to any of claims 1 to 3,
**characterized in that**
the electronic control circuit (70) has a LS (low-side) switch having a conductive and a non-conductive switching state, it being possible for the switching state of the LS switch to be changed by means of the electronic control circuit (70), in particular in addition to a control circuit (70) for a HS (high-side) switch for normal operation.

5. The electronic device (10) according to claim 4,
**characterized in that**
the bistable electropneumatic valve (20) can be transferred to the first or the second switching state in the conductive state of the LS switch, and **in that** the bistable electropneumatic valve (20) is thermally protected in the non-conductive state of the LS switch.

6. The electronic device (10) according to any of claims 1 to 5,
**characterized in that**
a first LS switch is connected for control to a first electrical part (77.1), in particular a first solenoid (M1), of the bistable electropneumatic valve (20), and a second LS switch is connected for control to a second electrical part (77.2), in particular a second solenoid (M2), of the bistable electropneumatic valve (20), it being possible for the first or the second LS switch to be operated for an emergency switching operation, in particular the first or the second LS switch being released via an external switch and a digital logic.

7. The electronic device (10) according to any of claims 1 to 6,
**characterized in that**
the electronic control circuit (70) is connected to a line (110.2) for an auxiliary electric power supply that leads to a thus accessible connector with switch (90), and **in that** the second power source (60) can be connected to the line (110.2) via cabling (110.1) for an auxiliary electric power supply.

8. The electronic device (10) according to claim 7,
**characterized in that**
the accessible connector with switch (90) of a line (110.2) connected to the electronic control circuit (70) is designed for an auxiliary electric power supply on the vehicle frame and/or in a cab of the vehicle (1000).

9. The electronic device (10) according to any of claims 1 to 8,
**characterized in that**
the external power source (70) can be connected by means of cabling (110.1) for an auxiliary electric power supply, in particular the cabling has an adapter cable or a starter cable.

10. The electronic device (10) according to any of claims 1 to 9,
**characterized in that**
the bistable electropneumatic valve (20) can be transferred in a pulsed manner, in particular the electronic control circuit (70) is designed to transfer the switching state of the bistable electropneumatic valve (20) by means of a current pulse, preferably it being possible for the current pulse to be provided by the second power source (60), in particular to be changed during a pulse duration, in particular such that the bistable valve is thermally protected outside the pulse duration.

11. The electronic device (10) according to claim 7 or according to any of claims 8 to 10, when claiming the features of claim 7,
**characterized in that**
the accessible connector with switch (90) has at least four contacts, the first switching state of the bistable electropneumatic valve (20) being assigned to a first contact, the second switching state of the bistable electropneumatic valve (20) being assigned to a second contact, the transfer of the switching state of the
bistable electropneumatic valve (20) to the respective other switching state being assigned to a third contact, and the connection to a ground potential being assigned to a fourth switching state.

12. An electropneumatic parking brake system (100) having at least one electropneumatic parking brake circuit (50) for a vehicle (1000), and an electronic device (10) according to any of claims 1 to 11 for controlling the electropneumatic parking brake circuit (50), wherein the electropneumatic parking brake circuit (50) is designed to actuate at least one parking brake (30) which is pneumatically connected to the parking brake circuit, and
- the parking brake circuit (50) has at least one bistable electropneumatic valve (20) which can be transferred by means of the electronic control unit (ECU, 11) to a first switching state in a first operating state and to a second switching state in a second operating state, and
- the parking brake circuit (50) is designed such that the parking brake (30) is applied in the first operating state and is released in the second operating state, wherein
- the electronic control unit (ECU, 11) can be operated by a first power source (40).

13. A vehicle (1000) comprising at least one electropneumatic parking brake system (100) which is designed according to claim 12.

14. A method for controlling an electropneumatic parking brake circuit (50) for a vehicle (1000) by means of an electronic device (10) which is designed according to at least one of claims 1 to 11, the electropneumatic parking brake circuit (50) being designed to actuate at least one parking brake (30) which is pneumatically connected to the parking brake circuit, and
- the parking brake circuit (50) having at least one bistable electropneumatic valve (20) which can be transferred by means of the electronic control unit (ECU, 11) to a first switching state in a first operating state and to a second switching state in a second operating state, and
- the parking brake circuit (50) being designed such that the parking brake (30) is applied in the first operating state and is released in the second operating state,
- it being possible for the electronic control unit (ECU, 11) to be operated by a first power source (40),
the method being **characterized in that**
the switching state of the bistable electropneumatic valve (20) is changed by an electronic control circuit (70) and **in that** the control circuit (70) is operated by the second power source (60).

15. The method according to claim 14, wherein the second power source (60) is connected to an accessible connector with switch (90) by means of cabling (110) for an auxiliary electric power supply.

## Revendications

1. Dispositif électronique (10) comportant une unité de commande électronique (ECU, 11) permettant de commander un circuit de frein de stationnement électropneumatique (50) pour un véhicule (1000), dans lequel le circuit de frein de stationnement (50) est conçu pour l'actionnement d'au moins un frein de stationnement (30) raccordé pneumatiquement au circuit de frein de stationnement, et
- le circuit de frein de stationnement (50) présente au moins une soupape bistable électropneumatique (20) qui peut être transférée vers un premier état de commutation dans un premier état de fonctionnement et vers un second état de commutation dans un second état de fonctionnement au moyen de l'unité de commande électronique (ECU, 11), et
- le circuit de frein de stationnement (50) est conçu de telle sorte que le frein de stationnement (30) est fixé dans le premier état de fonctionnement et est libéré dans le second état de fonctionnement, dans lequel
- l'unité de commande électronique (ECU, 11) peut être actionnée par une première source d'énergie (40),
dans lequel le dispositif électronique (10) présente un circuit de commande électronique (70) pouvant fonctionner à partir d'une seconde source d'énergie (60) et au moyen duquel la soupape bistable électropneumatique (20) peut être transférée vers le premier ou le second état de commutation,
**caractérisé en ce que** la seconde source d'énergie (60) est une source d'énergie externe située à l'extérieur du véhicule (1000).

2. Dispositif électronique (10) selon la revendication 1,
**caractérisé en ce que**
l'unité de commande électronique (ECU, 11) présente le circuit de commande électronique (70).

3. Dispositif électronique (10) selon la revendication 1,
**caractérisé en ce que**
le circuit de commande électronique (70) est conçu indépendamment de l'unité de commande électronique (ECU, 11).

4. Dispositif électronique (10) selon l'une des revendications 1 à 3,
**caractérisé en ce que**
le circuit de commande électronique (70) présente un commutateur LS (côté basse tension) comportant un état de commutation conducteur et un état de commutation non conducteur, l'état de commutation du commutateur LS pouvant être modifié au moyen du circuit de commande électronique (70), en particulier en plus d'un circuit de commande (70) pour un commutateur HS (côté haute tension) pour un fonctionnement normal.

5. Dispositif électronique (10) selon la revendication 4,
**caractérisé en ce que**
la soupape bistable électropneumatique (20) peut être transférée vers le premier ou le second état de commutation à l'état conducteur du commutateur LS **et en ce que** la soupape bistable électropneumatique (20) est protégée thermiquement à l'état non conducteur du commutateur LS.

6. Dispositif électronique (10) selon l'une des revendications 1 à 5,
**caractérisé en ce que**
un premier commutateur LS est relié de manière commandée à une première partie électrique (77.1), en particulier à une première bobine magnétique (M1), de la soupape bistable électropneumatique (20), et un second commutateur LS est relié de manière commandée à une seconde partie électrique (77.2), en particulier à une seconde bobine magnétique (M2), de la soupape bistable électropneumatique (20), le premier ou le second commutateur LS pouvant être actionné pour une commutation d'urgence, en particulier le premier ou le second commutateur LS étant libéré par l'intermédiaire d'un commutateur externe et d'une logique numérique.

7. Dispositif électronique (10) selon l'une des revendications 1 à 6,
**caractérisé en ce que**
le circuit de commande électronique (70) est relié à une ligne électrique (110.2) pour une alimentation auxiliaire électrique menant à une borne ainsi accessible avec commutateur (90), **et en ce que** la seconde source d'énergie (60) peut être raccordée par l'intermédiaire d'un câblage (110.1) à la ligne électrique (110.2) pour une alimentation auxiliaire électrique.

8. Dispositif électronique (10) selon la revendication 7,
**caractérisé en ce que**
la borne accessible avec interrupteur (90) d'une ligne électrique (110.2) reliée au circuit de commande électronique (70) est conçue pour une alimentation auxiliaire électrique au niveau du châssis de véhicule et/ou dans une cabine du véhicule (1000).

9. Dispositif électronique (10) selon l'une des revendications 1 à 8,
**caractérisé en ce que**
la source d'énergie externe (70) peut être raccordée au moyen d'un câblage (110.1) pour une alimentation auxiliaire électrique, en particulier le câblage présente un câble adaptateur ou un câble de démarrage.

10. Dispositif électronique (10) selon l'une des revendications 1 à 9,
**caractérisé en ce que**
la soupape bistable électropneumatique (20) peut être transférée par impulsions, en particulier le circuit de commande électronique (70) est configuré pour transférer l'état de commutation de la soupape bistable électropneumatique (20) au moyen d'une impulsion de courant, de préférence l'impulsion de courant pouvant être fournie par la seconde source d'énergie (60), en particulier pouvant être modifiée pendant une durée d'impulsion, en particulier de sorte que la soupape bistable est protégée thermiquement en dehors de la durée d'impulsion.

11. Dispositif électronique (10) selon la revendication 7 ou selon l'une des revendications 8 à 10, lorsque celle-ci revendique les caractéristiques selon la revendication 7,
**caractérisé en ce que**
la borne accessible avec commutateur (90) présente au moins quatre contacts, le premier état de commutation de la soupape bistable électropneumatique (20) étant associé à un premier contact, le second état de commutation de la soupape bistable électropneumatique (20) étant associé à un deuxième contact, le transfert de l'état de commutation
de la soupape bistable électropneumatique (20) vers l'autre état de commutation respectif étant associé à un troisième contact et la connexion à un potentiel de masse étant associée à un quatrième état de commutation.

12. Système de frein de stationnement électropneumatique (100) présentant au moins un circuit de frein de stationnement électropneumatique (50) pour un véhicule (1000) et un dispositif électronique (10) selon l'une des revendications 1 à 11 pour la commande du circuit de frein de stationnement électropneumatique (50), dans lequel le circuit de frein de stationnement électropneumatique (50) est conçu pour l'actionnement d'au moins un frein de stationnement (30) raccordé pneumatiquement au circuit de frein de stationnement, et
- le circuit de frein de stationnement (50) présente au moins une soupape bistable électropneumatique (20) qui peut être transférée vers un premier état de commutation dans un premier état de fonctionnement et vers un second état de commutation dans un second état de fonctionnement au moyen de l'unité de commande électronique (ECU, 11), et
- le circuit de frein de stationnement (50) est conçu de telle sorte que le frein de stationnement (30) est fixé dans le premier état de fonctionnement et est libéré dans le second état de fonctionnement, dans lequel
- l'unité de commande électronique (ECU, 11) peut être actionnée par une première source d'énergie (40).

13. Véhicule (1000) comportant au moins un système de frein de stationnement électropneumatique (100) conçu selon la revendication 12.

14. Procédé permettant la commande d'un circuit de frein de stationnement électropneumatique (50) pour un véhicule (1000) au moyen d'un dispositif électronique (10) conçu selon au moins l'une des revendications 1 à 11, dans lequel le circuit de frein de stationnement électropneumatique (50) est conçu pour l'actionnement d'au moins un frein de stationnement (30) raccordé pneumatiquement au circuit de frein de stationnement, et
- le circuit de frein de stationnement (50) présente au moins une soupape bistable électropneumatique (20) qui peut être transférée vers un premier état de commutation dans un premier état de fonctionnement et vers un second état de commutation dans un second état de fonctionnement au moyen de l'unité de commande électronique (ECU, 11), et
- le circuit de frein de stationnement (50) est conçu de telle sorte que le frein de stationnement (30) est fixé dans le premier état de fonctionnement et est libéré dans le second état de fonctionnement, dans lequel
- l'unité de commande électronique (ECU, 11) peut être actionnée par une première source d'énergie (40),
le procédé étant **caractérisé en ce que**
l'état de commutation de la soupape bistable électropneumatique (20) est modifié par un circuit de commande électronique (70) **et en ce qu'**ainsi, le circuit de commande (70) est actionné par la seconde source d'énergie (60).

15. Procédé selon la revendication 14, dans lequel la seconde source d'énergie (60) est raccordée à une borne accessible avec commutateur (90) par un câblage (110) pour une alimentation auxiliaire électrique.
